# EUROPEAN PATENT APPLICATION

(11) **EP 2 216 867 A2**
(43) Date of publication of application: **11.08.2010**
(21) Application number: 10153161.4
(22) Date of filing: 10.02.2010
(51) Int. Cl.: H02G 3/08, G02B 6/44

(54) **Seal, casing provided with seal, and method for inserting optical fibre cable into casing**

(30) Priority: 10.02.2009 FI 20095127
(71) Applicant: Fibox Oy Ab, 02150 Espoo (FI)
(72) Inventor: Weber, Kenneth, 10320, Karjaa (FI)
(74) Representative: Roitto, Klaus

(57) **Abstract**

The invention relates to a flexible planar seal (15a) comprising an outer circumference (1) and a through hole inside thereof for receiving a cable (3) in such a manner that a seal wall (4) at the through hole tightly surrounds the cable (3). In order for the seal to allow an easy insertion of the cable into the through hole (2) in every application, the through hole (2) comprises a weakening film (5) and the region between the seal's outer circumference (1) and the weakening film (5) comprises a frangible weakening region, which defines an access for the cable (3) from the outer circumference (1) to the through hole (2). The invention also relates to an enclosure for optical fibre cables, and a method for inserting an optical fibre cable into an optical fibre cable enclosure.

## Description

### Background of the invention

The invention relates to a seal for sealably receiving an elongated object. More specifically, the invention relates to a flexible planar seal which is claimed in the preamble of the attached claim 1 and is particularly suitable for receiving cables and pipes and sealing them at through holes in walls of different structures, such as enclosures.

It is known to install cables and other elongated objects sealably at through holes of walls in such a manner that humidity or the like cannot be transferred at the through hole from one surface of the wall to the opposite wall surface. Examples of such sealed, elongated objects include electric cables and optical fibre cables which are sealed at the through hole of the enclosure wall by means of annular seals. The cable is sealed by selecting an annular seal whose inner diameter is slightly smaller than the outer diameter of the cable, which means that when a cable end is inserted into and through the through hole of the seal, the seal yields and is set tightly around the cable. In some technical applications, it may be difficult to implement the insertion of the cable. The reason may be that there is not very much space to insert the cable. It has proven particularly laborious and problematic to insert optical fibre cables into their enclosure in said manner, since they have to be provided with splices in order to bring some of the cable fibres to another site of application than the rest of the cable fibres. This is due to the fact that cables are very long, and to insert them through a seal/seals requires in practice that all optical fibres of the optical fibre cable must be cut, i.e. broken, first. After a broken cable has been inserted through the seal/seals, the cable has to be "fixed" by connecting its optical fibres together. It is laborious and time-consuming to repair the cable by connecting its optical fibres back together, because there are a lot of optical fibres. Special tools are needed for connecting. A significant problem is also that the optical properties of the optical fibre at the connecting point are not comparable to those of the optical fibre without a splice: the splice causes undesired reflections, which attenuate the signal to be transmitted. This causes problems in transferring a television signal, for instance.

Publication BE 621632 discloses a flexible planar seal as claimed in the preamble of claim 1. The seal allows the insertion of a cable into a through hole of the seal by first breaking a weakening film at the through hole of the seal. The cable is led into the seal in the longitudinal direction of the cable and in a direction perpendicular to the plane defined by the seal.

The invention also relates to an enclosure for cables, particularly optical fibre cables.

In known, conventional enclosures for cables, cables must be inserted into the enclosure through an O-ring in the enclosure. In some applications this is difficult, as was explained above. Especially if it concerns an optical fibre cable that has to enter the enclosure at one point and exit it at another point, the work takes a lot of time, as was described above.

Publication FI 119040B discloses an enclosure with a split seal. The seal allows the insertion of a cable into the enclosure by leading the cable laterally to the through hole of the seal.

The invention further relates to a method for inserting an optical fibre cable into an optical fibre cable enclosure from a first through hole of the enclosure and guiding it out of the enclosure from a second through hole, and sealing an optical fibre cable against the surroundings outside the enclosure.

Guiding an optical fibre cable into an optical fibre cable enclosure from the first through hole and out of the enclosure from the second through hole is time-consuming, if such seals are used that require that the cable has to be pushed axially through the through hole of the seal and that all optical fibres of the cable have to be cut and, thereafter, most of the optical fibres have to be reconnected by means of splices.

### Brief description of the invention

It is thus an object of the invention to provide a novel seal allowing an easy insertion of an elongated object into a through hole of the seal additionally via another route than by pushing the cable axially through a weakening film at the through hole of the seal.

The seal according to the invention is **characterized in that** the sealing material between the seal's outer circumference and the weakening film defines a lateral access for the elongated object from the outer circumference to the through hole to bring the elongated object in a lateral direction to the through hole from the outer circumference of the seal and perpendicularly to the longitudinal direction of the elongated object, after the sealing material in the weakening region has been broken.

Since the seal has a tapering shape, it is very easy to mount it in its place.

By arranging two annular sealing sections at the through hole of the seal, it is possible to provide a very efficient and reliable sealing capability for the seal.

An easy way to form a weakening region in the sealing material is to provide the sealing material with one or more weakening cuts.

Preferred embodiments of the seal according to the invention are disclosed in the attached claims 2 to 8.

The greatest advantage of the seal according to the invention is that, in every installation and application, it makes it easy to insert an elongated object to the through hole of the seal and have it surrounded by the through hole. It is thus possible to use the same seal at different objects, which also improves the logistics and abolishes the need for storing seals with different kinds of structures.

It is also an object of the invention to provide a novel enclosure facilitating the installation of cables, particularly optical fibre cables.

The enclosure of the invention is characterized by what is disclosed in the attached claim 9.

A groove in the enclosure is preferably arranged to taper towards the bottom part of the enclosure in order to receive a seal having a tapering shape.

Preferably the enclosure comprises a second through hole, which is defined by a groove, which is open towards the cover of the enclosure and arranged to receive a second flexible planar seal for receiving a cable. Such an enclosure makes it possible that only some of the ducts/fibres of a very long cable, particularly an optical fibre cable, are cut and taken out of the enclosure to a first application site/object, whereas the rest of the cable ducts/fibres may be taken to a second application site/object (which is other than the first application site/object) without breaking or cutting them. When the cable needs to be split off in the above manner, which is typical for optical fibre cables, the enclosure preferably comprises at least two grooves of the above type for receiving said seals.

The preferred embodiments of the enclosure according to the invention are disclosed in the attached claims 10 and 11.

The greatest advantage of the enclosure according to the invention is that it makes it easy in every situation and application, including optical fibre cable applications, to insert an elongated object to the through hole of the seal and to seal the cable.

It is also an object of the invention to provide a novel, very quick method for installing an optical fibre cable in an optical fibre cable enclosure.

The method of the invention is characterized by what is disclosed in the characterizing part of the attached claim 12. The preferred embodiment of the method is disclosed in the attached claim 13.

The greatest advantage of the method according to the invention is that it allows the installation of an optical fibre cable in an optical fibre cable enclosure without needing to cut the optical fibre cable, which also means that there is no need to form a plurality of splices to connect the optical fibres contained in the cables back together. This also makes it possible to avoid the deterioration of light transmission properties of optical fibres.

### Brief description of the figures

The invention will now be described in greater detail by means of a preferred embodiment and with reference to the accompanying drawing, in which:
Figure 1 shows an optical fibre cable installed in an optical fibre cable enclosure according to the prior art,
Figures 2 to 4 show an optical fibre cable enclosure of the invention as a perspective view, from the front and from the back, respectively,
Figure 5 illustrates a method of the invention for connecting an optical fibre cable to the optical fibre cable enclosure of the invention, in which a seal according to the invention is used, and
Figures 6 to 11 show the seal of the invention from different angles.

### Detailed description of the invention

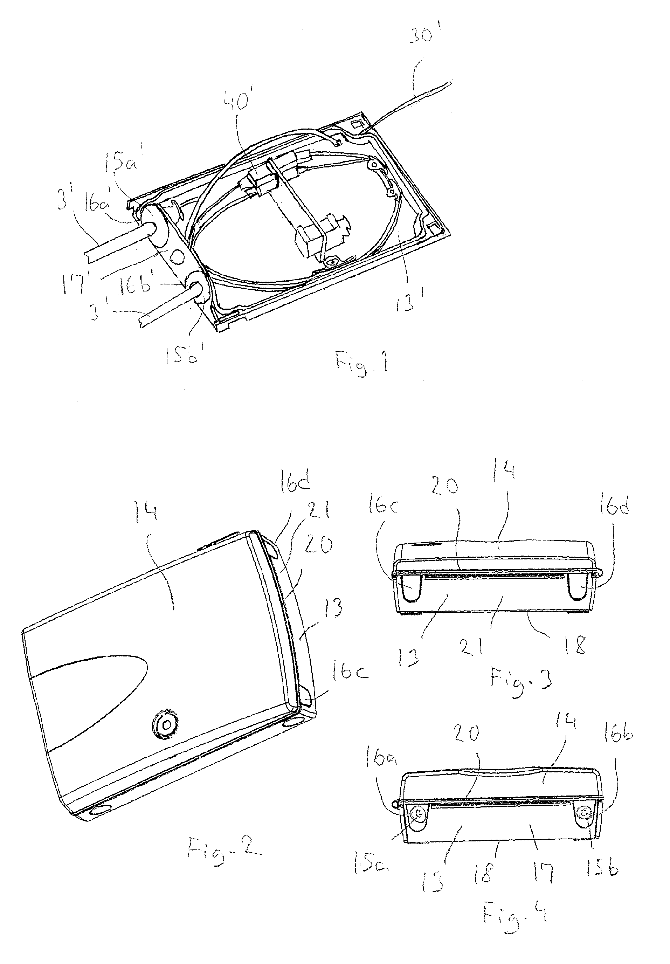

Figure 1 shows a prior art arrangement for installing an optical fibre cable 3' in an optical fibre cable enclosure. The figure only shows a bottom part 13' of the optical fibre cable enclosure together with its O-rings 15a' and 15b', and the optical fibre cable 3' with its splices 40', which connect the various optical fibres of the optical fibre cable together. The cover of the enclosure, which is to be set tightly onto the bottom part 13', is not shown. The seals 15a', 15b' are installed at through holes 16a', 16b' in a wall structure 17' of the bottom part 13'. Reference numeral 30' refers to optical fibres, which are split/separated from the optical fibre cable 3' and exit the enclosure and which area inserted to a desired object, i.e. application site (not shown). If the optical fibre cable enclosure is fixed to a building (not shown), as is typical, the object is the data system of the building. The building is a block of flats, for example. The number of optical fibres 30' inserted to a data system of a building is typically only a small fraction of the number of optical fibres contained in the optical fibre cable 3'.

The optical fibre cable 3' enters the enclosure through the seal 15a' and passes through the seal 15b' to another building. The cable 3' passing through the seal 15b' contains a smaller number of optical fibres than the cable 3' passing through the seal 15a'. In spite of this, it can be said that the cables 3' passing through the seals 15a', 15b' are the same cable. It is made of the same cable which is cut in order to install it inside the enclosure and to separate a few sparse optical fibres 30 to be led to a desired object, after which the optical fibres of the cable are melt back together to form a plurality of connecting points or splices 40'. In the arrangement of Figure 1, the entire cable 3' must thus be cut in practice, because the cable 3', which must be led from one object to another, is so long (a few kilometres, for example) that it cannot be led as such through the seals 15a', 15b'. The known arrangement of Figure 1 thus requires that the cable 3' is cut and several splices 40' are provided.

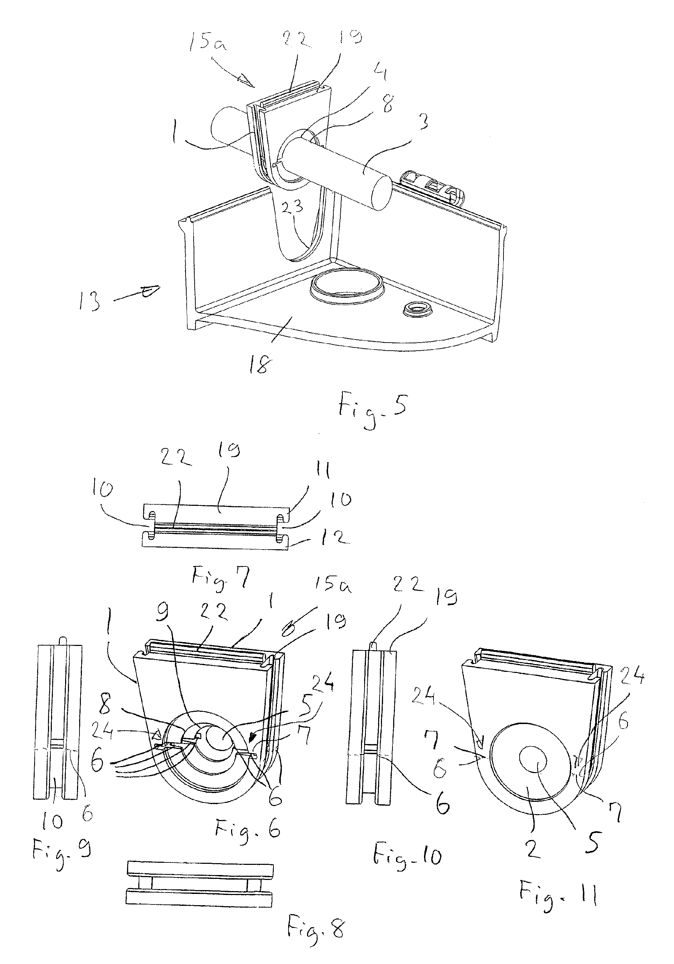

Figures 2 to 4 show an optical fibre cable enclosure of the invention from different angles. The enclosure comprises a bottom part 13 with a bottom 18 and a wall structure extending upwards therefrom and making the bottom part look like a trough. The wall structure 17 of the bottom part, which is behind the enclosure and from which a part is shown in Figure 5 on an enlarged scale, comprises two through holes 16a, 16b, at which seals 15a, 15b are installed, cf. Figure 4. Figures 2 and 3 show that the front part of the enclosure has a similar wall structure 21 with two through holes 16c, 16d. For the sake of simplicity, no seals are drawn at the through holes 16c, 16d, but similar seals 15a, 15b can be used there as in the wall structure 17. Also the cover 14 of the enclosure is trough-shaped and set sealably against the bottom part 13 when all through holes 16a to 16d in the bottom part are provided with seals. When the cover 14 is against the bottom part 13, its lower edge 20 is pressed against the straight upper edge of the seals 15a, 15b, forming a straight circumferential section 19 so that the seals are pressed inside the grooves 16a to 16d defining the through holes, thus providing a compact enclosure. The seals 15a, 15b are a bit larger than the grooves 16a, 16b provided for them, which provides a pressing effect. The seals 15a, 15b are also set sealably around the cable 3' installed inside them, which leads to an entity consisting of the enclosure, seals and cables and having an IP code of IP54, for instance. The seals 15a, 15b are made of a flexible material, preferably EPDM material. This material is particularly suitable, since the seals must yield well but they must also be capable of being broken, which is discussed hereinafter. Inside the enclosure there are one or more cassettes (not shown) for receiving optical fibres.

Figure 5 illustrates the installation of the cable 3 in the enclosure. In the figure, the cable 3 seems cut but in the solution of the invention this is not the case; it only deals herein with a simplification carried out in the drawing. In the figure, the cable 3 is installed in the through hole of the seal 15a, where it is surrounded by a wall 4 sealing the seal. The sealing wall 4 comprises an annular sealing section 8, which can be seen in Figure 6 showing an individual seal 15a. It can be seen from Figure 6 that the seal 15a also comprises a second sealing annular section 9 that is further inside the seal. The latter has a smaller diameter than the former, wherefore the seal 15a may receive cables with greatly different diameters. Due to two annular sections 8, 9 the tightness reliability can be improved when both of them surround the cable tightly. The diameters of the annular sections 8, 9 must naturally be selected in such a manner that a desired effect, i.e. suitability for cables with different diameters or a better sealing, will be achieved.

According to the invention, the cable 3 and its seals 15a are lowered down to a receiving groove 16a in the bottom part 13 of the enclosure. The groove 16a and the seal 15a have the same tapering shape and are thus wedge-shaped. The seal 15a tapers towards the bottom 18 of the bottom part; accordingly, the groove 16a widens in a direction away from the bottom part 13, i.e. towards the cover 14 to be set onto the bottom part 13, cf. Figure 4. Accordingly, the cable 3 and its seals 15b are installed in the groove 16b, cf. Figure 4. Because of the tapering shape the installation is easy. It is to be noted that the installation of the cable 3 does not mean it must be cut but it is sufficient to only break its sheath and then break only one optical fibre or a few optical fibres from the plurality of optical fibres in the cable so that a desired number of optical fibres can be inserted into the object. In this way, many unnecessary cuttings and splices of optical fibres can be avoided, unlike in the known solution of Figure 1.

The through holes are formed near the bottom 18 of the bottom part 13, because the cable 3 has to be set close to the bottom 18.

Figures 6 to 11 show a seal 15a, which is utilized in the installation of the cable 3 according to the invention. The figures show the seal from behind as a perspective view, from the top, from below, from both sides, and as a front perspective view.

The seal 15a is planar and flexible. In the middle of the seal 15a there is a through hole 2, to which the cable 3 is intended to be set. In the central region of the through hole 2 there is an annular weakening film 5 (cf. Figures 6 and 11), where the thickness of the sealing material is relatively small so as to allow its easy breaking. In the region between the outer circumference 1 of the seal 15a and the weakening film 5 there is a weakening region generally marked with reference numeral 24. The weakening region 24 is provided by forming cuts 6 in the seal 15a, which weakens the sealing material 7. The number of cuts 6 may vary. The cuts 6 extend from the outer circumference 1 of the seal close to the weakening film 5 or to the weakening film. The cuts 6 are preferably shaped in such a manner that the breaking of the sealing material 7 in the weakening region 24 can be performed manually. The shape, number and exact location of the cuts 6 are not explained in this context, because a person skilled in the art is able to design and implement the necessary cuts 6. The cuts 6 may preferably abut on the outer circumference 1 of the seal. When the cable 3 is to be provided at the through hole, the sealing material 7 in the weakening region 24 is broken with bare hands. The breaking is easy because of the cuts 6. After this, the cable 3 is led laterally to the through hole 2 by moving it substantially perpendicularly to its longitudinal direction towards the through hole. The weakening region 24 between the outer circumference 1 and the weakening film 5 defines for the cable 3 an access to the through hole 2. Leading the cable 3 to the weakening film 5 is easy, because the weakening region 24 extends as far as to the weakening film 5, which is easily broken.

It is to be noted that the cable may also be installed in the seal 15a of the invention in a conventional manner, i.e. by pushing the cable end in the direction of the cable through the weakening film 5 of the seal, whereby the weakening region 24 between the seal's outer circumference 1 and the weakening film 5 is not broken.

The outer circumference 1 of the seal 15a comprises a circumferential groove 10. The groove 10 is defined by circumferential parts 11, 12. The groove and the circumferential parts 11, 12 together define a flexible structure, which is arranged to be pressed against a tongue 23 in the groove 16a of the enclosure. The tongue 23 is intended to be arranged in the groove 10 of the seal. The described solution enables that the seal 15a can very likely be sealed well at the bottom part 13 of the enclosure. The seal 15a preferably comprises a straight circumferential section 19, which preferably comprises a planar upper surface, which is set against the lower edge 20 of the enclosure cover 14. The circumferential section 19 comprises a tongue-shaped protrusion 22, which is set to the groove at the lower edge of the cover 14 (not shown in the figures but corresponding to the groove encircling the circumference of the bottom part 13' in Figure 1).

The described structure enables that the seal can very likely be sealed well against the cover 14 of the enclosure and the bottom part 13. It is obvious that, deviating from what is described above, the straight circumferential section of the seal may comprise a groove, in which case the cover accordingly comprises a tongue for receiving the groove; and the curved outer circumference of the seal may comprise a circumferential tongue-shaped protrusion, in which case there is a groove, respectively, in the groove 16a of the wall structure 17 for receiving the tongue-like protrusion.

In the above, the invention is only described by means of an example application, wherefore it is noted that the details of the invention may be implemented in various ways within the scope of the attached claims. Consequently, the seal of the invention may be used for sealing other elongated object than cables, the shape of the seal as well as its detailed structure may vary. Accordingly, the details of the enclosure according to the invention may differ: for instance, the number, location and shape of the through holes may vary.

## Claims

1. A flexible planar seal (15a) comprising an outer circumference (1) and a through hole (2) inside thereof for receiving an elongated object (3), particularly a cable or a pipe, in such a manner that a seal wall (4) at the through hole tightly surrounds the elongated object (3), the through hole (2) comprising a weakening film (5) and the region between the seal's outer circumference (1) and the weakening film (5) comprising a weakening region (24) for facilitating the breaking of sealing material (7) between the seal's outer circumference (1) and the weakening film (5) and the leading and positioning of the elongated object (3) to the through hole (2) after the sealing material (7) of the weakening region (24) has been broken, **characterized in that** the sealing material (7) between the outer circumference (1) and the weakening film (5) defines a lateral access for the elongated object (3) from the outer circumference (1) to the through hole (2) to bring the elongated object in a lateral direction to the through hole (2) from the outer circumference (1) of the seal and perpendicularly to the longitudinal direction of the elongated object, after the sealing material in the weakening region (24) has been broken.

2. A seal as claimed in claim 1, **characterized in that** the outer circumference (1) of the seal defines a tapering shape for the seal (15a).

3. A seal as claimed in claim 1 or 2, **characterized in that** the outer circumference (1) of the seal comprises a straight circumferential section (19).

4. A seal as claimed in claim 1, **characterized in that** the through hole (2) comprises at least two concentric annular sealing sections (8 and 9) with different diameters for surrounding the elongated object (3).

5. A seal as claimed in claim 1, **characterized in that** the outer circumference (1) of the seal (15a) comprises a circumferential groove (10) for receiving a tongue of the wall structure not belonging to the seal.

6. A seal as claimed in claim 1 or 5, **characterized in that** the outer circumference (1) of the seal (15a) comprises a circumferential tongue (22) for receiving a groove of the wall structure not belonging to the seal.

7. A seal as claimed in claim 1, **characterized in that** the seal (15a) is EPDM material.

8. A seal as claimed in claim 1, **characterized in that** the weakening region (24) is provided with at least one cut (6) weakening the sealing material (7).

9. An enclosure for cables, particularly optical fibre cables, the enclosure comprising the seal (15a) as claimed in any one of the preceding claims 1 to 8 for receiving an elongated object in the form of a cable, the enclosure comprising a bottom part (13) and a cover (14), which bottom part comprises a wall structure (17) with a through hole at which said seal (15a) is arranged, the through hole in the bottom part (13) of the enclosure being defined by a groove (16a) which is provided in the wall structure (17) of the bottom part and which is open towards the enclosure cover (14).

10. An enclosure as claimed in claim 9, **characterized in that** the groove (16a) is provided in the wall structure (17) of the bottom part, which is substantially vertical to the bottom (18) of the bottom part, that the groove (16a) is arranged to taper towards the bottom (18) of the bottom part to receive the seal (15a) having a tapering shape, and that the seal comprises a planar straight circumferential section (19), which is arranged to be set against an edge (20) of the enclosure cover (14) set towards the bottom part (13).

11. An enclosure as claimed in claim 9 or 10, **characterized in that** it comprises a second through hole, which is defined by a groove (16b), which is open towards the cover (14) of the enclosure and arranged to receive a second flexible planar seal (15b) for receiving a cable.

12. A method for inserting an optical fibre cable (3) into an optical fibre cable enclosure from a first through hole of the enclosure and guiding it out of the enclosure from a second through hole, and sealing the optical fibre cable against the surroundings outside the enclosure, **characterized by** comprising the method steps of:
- using a flexible planar seal (15a) at said through holes to seal the optical fibre cable (3) against the surroundings, the seal comprising an outer circumference (1) and a through hole (2) inside thereof for receiving the optical fibre cable (3) in such a manner that a seal wall (4) at the through hole tightly surrounds the optical fibre cable (3), the through hole (2) comprising a weakening film (5) and the region between the seal's outer circumference (1) and the weakening film (5) comprising a weakening region (24) for facilitating the breaking of sealing material (7) between the seal's outer circumference (1) and the weakening film (5) and the leading and positioning of the optical fibre cable (3) to the through hole (2) after the sealing material (7) of the weakening region (24) has been broken, whereby the sealing material (7) between the outer circumference (1) and the weakening film (5) defines a lateral access for the optical fibre cable (3) from the outer circumference (1) to the through hole (2),
- using as an optical fibre cable enclosure an enclosure, which comprises a bottom part (13) and a cover (14), the bottom part comprising two grooves (16a, 16b) arranged in a wall structure (17) of the bottom part and located at said through holes, each of the grooves being arranged to receive the planar seal (15a, 15b) and the grooves being open towards the enclosure cover (14),
- breaking the sealing material (7) of both seals (15a, 15b) in the region between the outer circumference (1) and the weakening film (5),
- inserting the optical fibre cable (3) laterally from the outer circumference (11) of both seals (15a and 15b) to their through hole (2) at and through the weakening film (5),
- leading the seals (15a, 15b) surrounding the optical fibre cable (3) into the grooves (16a, 16b) of the enclosure, and
- closing the cover (14) of the enclosure in such a manner that the seals (15a, 15b) are pressed between the grooves (16a, 16b) and the lower edge (20) of the cover set towards the bottom part (13).

13. A method as claimed in claim 12, **characterized by** forming splices for the optical fibre cable (3) by only cutting a limited number of optical fibres remaining inside the optical fibre cable enclosure, the limited number of optical fibre cables being connected to other optical fibres and the limited number being smaller than the total number of optical fibres in the optical fibre cable, whereby the majority of the optical fibres remaining inside the enclosure are left uncut and free of splices.
